# EUROPEAN PATENT SPECIFICATION

(11) **EP 1 484 937 B1**
(45) Date of publication and mention of the grant of the patent: **21.02.2007**
(21) Application number: 04252938.8
(22) Date of filing: 18.05.2004
(51) Int. Cl.: H04Q 7/38, H04B 1/16

(54) **User profile-based power up of a mobile unit for an incoming call**
Benutzerprofil-basierte Inbetriebnahme von einer mobilen Einheit für einen ankommenden Anruf
Mise en service d'une unité mobile basée sur un profil d'utilisateur pour un appel entrant

(30) Priority: 02.06.2003 US 452355
(43) Date of publication of application: 08.12.2004
(73) Proprietor: LUCENT TECHNOLOGIES INC., Murray Hill, New Jersey 07974-0636 (US)
(72) Inventor: Benco, David S., Winfield Illinois 60190 (US); Overend, Kevin J., Elmhurst Illinois 60126 (US); Sheen, Baoling S., Naperville Illinois 60565 (US); True, Sandra L., St. Charles Illinois 60175 (US); Voight, Kenneth J., Sugar Grove Illinois 60554 (US)
(74) Representative: Sarup, David Alexander

(56) References cited:
- EP-A- 0 676 884
- EP-A- 0 784 412
- EP-A- 1 158 685
- WO-A-02/32095
- US-B1- 6 487 425

## Description

### TECHNICAL FIELD

The invention relates generally to a mobile unit of a network and more specifically to a powering up of a powered down mobile unit.

### BACKGROUND

In order to prevent a mobile unit associated with a network in one example from initiating an alert for a call during an inconvenient time, for example, the mobile unit ringing during a meeting, the mobile unit is powered off. In another example, the mobile unit is powered off to conserve a battery-life associated with the mobile unit. Powering off the mobile unit prevents the mobile unit from receiving calls from the network. Unfortunately, where the mobile unit is powered off, an important or emergency call is missed and in one example is directed to voice mail associated with the mobile unit.

Therefore a need exists to select the calls received by the mobile unit when the mobile unit is powered off. A further need exists for the mobile unit to power up in order to receive the calls.

### SUMMARY

A method and apparatus according to the present invention are set out in the independent claims, to which the reader is now referred. Some preferred features are laid out in the dependent claims.

The following summary of the invention is provided to facilitate an understanding of some of the innovative features unique to the present invention and is not intended to be a full description. A full appreciation of the various aspects of the invention can be gained by taking the entire specification, claims, drawings, and abstract as a whole.

Improvements in call-barring services have been sought. For example, in an international application WO 02/32095 A1 published under the Patent Cooperation Treaty (PCT), an arrangement is provided for call-barring services in which the user designates preferred incoming caller telephone numbers which are allowed to terminate to the mobile phone. The user must either inform the service provider of the numbers of the preferred callers or capability must be provided with the mobile phone to compare an incoming number with a stored entry of preferred numbers. No consideration is given to the operating condition of the mobile unit. Other arrangements have been suggested for controlling access to a mobile telephone unit. For example, In United States patent number 6,487,425 B1 an arrangement is presented for switching a mobile station from a low power limited, operation to a normal operating mode. A first number is associated with the limited operations low power mode, while a second number is associated with the normal operating mode of the mobile station. Using the second telephone number, the network sends a power on message, instructing the mobile station to switch from a low-power mode to a normal operating mode. Despite this and other attempts, a practical satisfaction of outstanding demands is still being sought.

The invention provides improvements which are programmable by the user and which can be made automatically available to a predetermined number of callers without requiring intervention by the callers. In one embodiment the invention encompasses a method. A registered powered down condition is established in a mobile unit. If a call directed to the mobile unit is associated with an authorized calling number of a profile associated with the mobile unit, a plurality of response options are delivered to a telephonic station associated with the call. One of the plurality of response options comprises the step of instructing a switch to power up the mobile unit. The mobile unit is powered up in response to the call if the call is associated with the authorized calling number and the telephonic station has selected the response option that instructs the switch to power up the mobile unit.

Another embodiment of the invention encompasses an apparatus. The apparatus comprises a mobile unit and a switch. The switch includes means for maintaining the mobile unit in a registered powered down condition, means for determining if a call directed to the mobile unit corresponds to a caller identity associated with one authorized calling number of a profile associated with the mobile unit indicating that the caller is authorized to send an instruction to the switch to power up the mobile unit, means for delivering, prior to powering up the mobile unit, a plurality of response options to a telephonic station associated with the call, and for initiating with a network handling calls to be received by the mobile unit, one of the plurality of response options by the telephonic station, and means for powering up the mobile unit if the call is associated with the profile. The switch powers up the mobile unit if the call is associated with the authorized calling number and the telephonic station has selected the response option that instructs the switch to power up the mobile unit.

### DESCRIPTION OF THE DRAWINGS

Features of exemplary implementations of the invention will become apparent from the description, the claims, and the accompanying drawings in which:
FIG. 1 is a representation of one exemplary implementation of an apparatus that comprises a switch, a database, a network, a base station, a mobile unit, and a telephonic station.
FIG. 2 is a representation of an exemplary process flow of the network powering up the mobile unit of the apparatus of FIG. 1.

### DETAILED DESCRIPTION

The particular values and configurations discussed in these non-limiting examples can be varied and are cited merely to illustrate an embodiment of the present invention and are not intended to limit the scope of the invention.

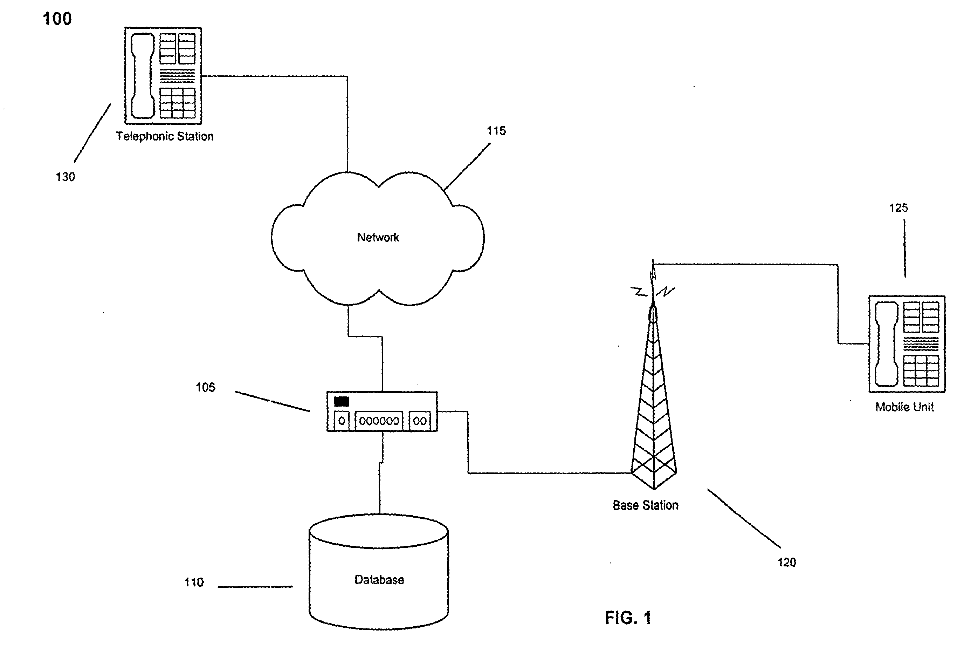

Turning to FIG. 1, an apparatus 100 in one example comprises a switch 105, a database 110, a network 115, a base station 120, a mobile unit 125, and a telephonic station 130. The network 115 comprises a telephone network, for example, a Public Switched Telephone Network ("PSTN"). The base station 120 comprises a cellular tower. The mobile unit 125 comprises a cellular phone. The telephonic station 130 comprises a telephony device, for example, a cellular phone or a land line phone.

The switch 105 communicates with the network 115 to receive a call from the telephonic station 130. The switch 105 communicates with the database 110 to retrieve a profile associated with a called party of the call, for example, the mobile unit 125. The switch 105 communicates with the network 115 to deliver a plurality of response options to the telephonic station 130. The switch 105 communicates with the base station 120 to power up the mobile unit 125. In one example, the switch 105 delivers to the telephonic station 130 a first response option of the plurality of response options to direct the call to a voice mail associated with the mobile unit 125. In another example, the switch 105 delivers to the telephonic station 130 a second response option of the plurality of response options to instruct the switch 105 to power up the mobile unit 125.

The switch 105 powers up the mobile unit 125 in one example by initiating a power up message to the mobile unit 125. The switch 105 maintains an option of powering off the mobile unit 125.

The database 110 stores the profile associated with the mobile unit 125. The profile comprises a plurality of authorized calling numbers associated with the mobile unit 125. A user of the mobile unit 125 employs a first user interface of the mobile unit 125 to provision the plurality of authorized calling numbers in the database 110. The plurality of authorized calling numbers indicates a plurality of calling numbers from which the user of the mobile unit 125 selects to receive calls.

In operation, the mobile unit 125 establishes one condition of either: a powered off condition; a registered powered down condition; and a powered up condition. An example of the registered powered down condition is disclosed in U.S. Patent No 6,463,307 issued to Larsson, et al. on October 8, 2002 entitled Method and Apparatus for Power Saving in a Mobile Terminal with Established Connections. For example, when the mobile terminal is awake, it can send a hibernation request to the base station, which will then respond with specific instructions including a time interval or frequency at which the mobile terminal should listen for paging messages from the base station.Thus, when the mobile terminal is hibernating, the base station can buffer data packets for the mobile terminal, and then send a paging message during the time the mobile terminal listens, so that the paging message will cause the mobile terminal to awaken and receive the data packets. If the mobile terminal is already in the awake state when the base station receives or generates a data packet for transfer to the mobile terminal, then the base station can send the data packet directly without sending a paging message and receiving a paging message acknowledge signal.

When the user of the mobile unit 125 initiates a powering off of the mobile unit 125, the mobile unit 125 provides to the user one or more options of powering off the mobile unit 125. A first option of the one or more options comprises the mobile unit 125 establishing the powered off condition, wherein the mobile unit 125 fails to receive all calls from the network 115. A second option of the one or more options comprises the mobile unit 125 establishing the registered powered down condition, wherein the mobile unit 125 receives the calls indicated by the plurality of authorized calling numbers. The mobile unit 125 communicates with the switch 105 to indicate the option selected.

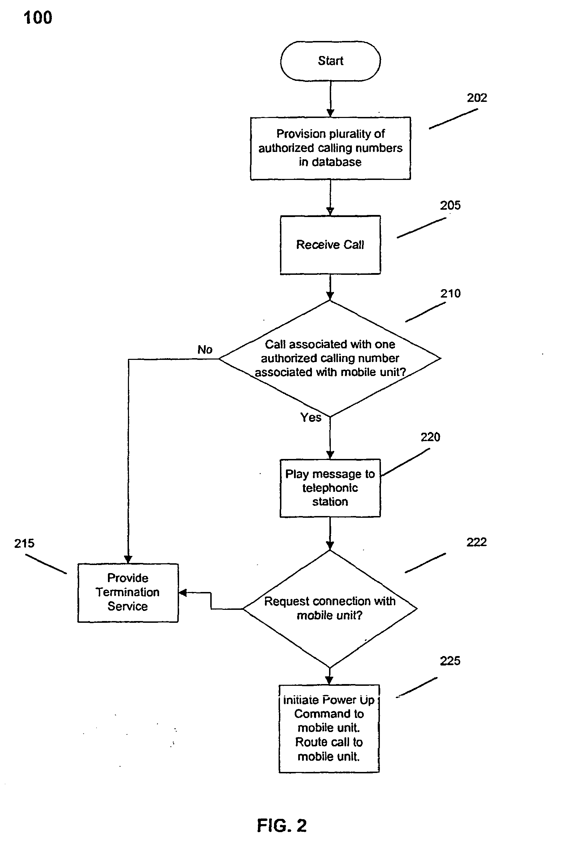

Referring to FIG. 2, the mobile unit 125 establishes the registered powered down condition. In the STEP 202, the user of the mobile unit 125 employs the first user interface to provision the plurality of authorized calling numbers into the database 110. In the STEP 205, the telephonic station 130 initiates the call destined for the mobile unit 125 that is received by the switch 105. In STEP 210, the switch 105 determines if the call is associated with one authorized calling number of the plurality of authorized calling numbers of the profile associated with the mobile unit 125. In STEP 215, the call is routed to the voice mail associated with the mobile unit 125 when the call is not associated with one authorized calling number.

In STEP 220, the switch 105 delivers to the telephonic station 130 the plurality of response options when the call is associated with one authorized calling number. The switch 105 in one example plays a message to a user of the telephonic station 130 indicating a delay in routing the call to the mobile unit 125. The delay corresponds to a duration of time for the mobile unit 125 to establish the powered up condition from the registered powered down condition. For example, the switch 105 plays the message to the user of the telephonic station 130 indicating the delay for the mobile unit 125 to power up comprises 20 seconds.

In STEP 215, the user of the telephonic station 130 selects the first response option to direct the call to the voice mail associated with the mobile unit 125. In STEP 222, the user of the telephonic station 130 selects the second response option to instruct the switch 105 to power up the mobile unit 125. In STEP 225, the switch 105 powers up the mobile unit 125 and routes the call to the mobile unit 125 when the call is associated with one authorized calling number.

The steps or operations described herein are just exemplary.

The apparatus 100 employs at least one computer-readable signal-bearing medium. One example of a computer-readable signal-bearing medium for the apparatus 100 comprises an instance of a recordable data storage medium such as one or more of a magnetic, electrical, optical, biological, and atomic data storage medium. The recordable data storage medium in one example comprises storage devices. In another example, a computer-readable signal-bearing medium for the apparatus 100 comprises a modulated carrier signal transmitted over a network comprising or coupled with the apparatus 100, for instance, one or more of a telephone network, a local area network ("LAN"), the internet, and a wireless network. An exemplary component of the apparatus 100 employs and/or comprises a set and/or series of computer instructions written in or implemented with any of a number of programming languages, as will be appreciated by those skilled in the art.

Although exemplary implementations of the invention have been depicted and described in detail herein, it will be apparent to those skilled in the relevant art that various modifications, additions, substitutions, and the like can be made without departing from the invention and these are therefore considered to be within the scope of the invention as defined in the following claims.

## Claims

1. A method, comprising the steps of:
providing a mobile unit (125) capable of operation in a powered off condition, a normally operating powered up condition and a registered powered down condition in which the powered down condition of the mobile unit is registered with a switch (105) handling calls to be received by the mobile unit;
establishing the registered powered down condition in the mobile unit;
determining if a call directed to the mobile unit is associated with an authorized calling number of a profile associated with the mobile unit, indicating that the corresponding caller is authorized to send an instruction to the switch to power up the mobile unit;
upon determining that the call is associated with the authorized calling number and prior to powering up the mobile unit, delivering to a telephonic station (130) associated with the call a plurality of response options;
initiating one of the plurality of response options, wherein one of the plurality of response options comprises the step of instructing the switch to power up the mobile unit; and
powering up the mobile unit in response to the call if the call is associated with an authorized calling number and the telephonic station (130) has selected the response option that instructs the switch (105) to power up the mobile unit.

2. The method of claim 1, further comprising the step of storing in a database the authorized calling number, and wherein the step of determining comprises the step of determining if the call is associated with the authorized calling number stored in the database.

3. The method of claim 2, wherein the step of storing further comprises the step of storing at least one of a plurality of authorized calling numbers in the database.

4. The method of claim 1, further comprising the steps of:
after powering up the mobile unit, obtaining a prompt from a user of the mobile unit, indicating that a registered power down condition for the mobile unit should be carried out; and
in response to the prompt, setting the mobile unit in a registered power down condition.

5. An apparatus (100), comprising:
a mobile unit (125); and
a switch (105) including:
means for maintaining the mobile unit in a registered powered down condition;
means for determining if a call directed to the mobile unit corresponds to a caller identity associated with one authorized calling number of a profile associated with the mobile unit indicating that the caller is authorized to send an instruction to the switch to power up the mobile unit;
means for delivering, prior to powering up the mobile unit, a plurality of response options to a telephonic station (130) associated with the call, and for initiating with a network (115) handling calls to be received by the mobile unit, one of the plurality of response options by the telephonic station (130) wherein one of the plurality of response options comprises instructing the network to power up the mobile unit (125); and
means for powering up the mobile unit if the call corresponds to a caller idendity associated with the profile and if the telephonic station (130) has selected the response option that instructs the switch (105) to power up the mobile unit (125).

6. The apparatus of claim 5, wherein the profile comprises at least one authorized calling number and the apparatus further comprising a database (110) with means for storing the at least one authorized calling number.

7. The apparatus of claim 5, further comprising means in the switch for obtaining a prompt from the user indicating that a registered powered down condition for the mobile unit should be carried out and for setting the mobile unit in a registered powered down condition after the mobile unit is powered un and upon receipt of the prompt from the user of the mobile unit indicating that a registered powered down condition for the mobile unit should be carried out.

## Patentansprüche

1. Verfahren, das folgende Schritte umfasst:
Bereitstellen einer mobilen Einheit (125), die in der Lage ist, in einem ausgeschalteten Zustand, in einem normalen angeschalteten Betriebszustand und in einem registrierten ausgeschalteten Zustand zu arbeiten, wobei der ausgeschaltete Zustand der mobilen Einheit bei einer Weiche (105) registriert ist, die Anrufe behandelt, die von der mobilen Einheit empfangen werden sollen,
Herstellen des registrierten ausgeschalteten Zustands in der mobilen Einheit,
Bestimmen, ob ein an die mobile Einheit gerichteter Anruf zu einer befugten Nummer eines zur mobilen Einheit gehörenden Profils gehört, womit angezeigt wird, dass der entsprechende Anrufer befugt ist, eine Anweisung an die Weiche zu senden, die mobile Einheit anzuschalten,
nach dem Bestimmen, dass der Anruf zu der befugten Rufnummer gehört und bevor die mobile Einheit angeschaltet wird, das Liefern mehrerer Antwortoptionen an eine zu dem Anruf gehörende Telefonstation (130),
Starten einer der mehreren Antwortoptionen, wobei eine der mehreren Antwortoptionen den Schritt des Anweisens der Weiche umfasst, die mobile Einheit anzuschalten, und
Anschalten der mobilen Einheit als Reaktion auf den Anruf, wenn der Anruf zu einer befugten Rufnummer gehört und die Telefonstation (130) die Antwortoption ausgewählt hat, die die Weiche (105) anweist, die mobile Einheit anzuschalten.

2. Verfahren nach Anspruch 1, das ferner den Schritt des Speicherns der befugten Rufnummer in einer Datenbank umfasst und wobei der Schritt des Bestimmens den Schritt des Bestimmens umfasst, ob der Anruf zu der befugten Rufnummer gehört, die in der Datenbank gespeichert ist.

3. Verfahren nach Anspruch 2, wobei der Schritt des Speicherns ferner den Schritt des Speicherns von mindestens einer von mehreren befugten Rufnummern in der Datenbank umfasst.

4. Verfahren nach Anspruch 1, das ferner folgende Schritte umfasst:
nach dem Anschalten der mobilen Einheit das Erlangen einer Vorgabe von einem Benutzer der mobilen Einheit, die angibt, dass ein registrierter ausgeschalteter Zustand für die mobile Einheit ausgeführt werden soll, und
als Reaktion auf die Vorgabe das Versetzen der mobilen Einheit in einen registrierten ausgeschalteten Zustand.

5. Vorrichtung (100), die Folgendes umfasst:
eine mobile Einheit (125) und
eine Weiche (105), umfassend:
Mittel zum Erhalten der mobilen Einheit in einem registrierten ausgeschalteten Zustand,
Mittel zum Bestimmen, ob ein an die mobile Einheit gerichteter Anruf einer Anruferidentität entspricht, die zu einer befugten Rufnummer eines zur mobilen Einheit gehörenden Profils gehört, womit angezeigt wird, dass der Anrufer befugt ist, eine Anweisung an die Weiche zu schicken, die mobile Einheit anzuschalten,
Mittel zum Liefern mehrerer Antwortoptionen an eine zu dem Anruf gehörende Telefonstation (130) vor dem Anschalten der mobilen Einheit und zum Starten einer der mehreren Antwortoptionen durch die Telefonstation (130) in einem Netzwerk (115), das Anrufe behandelt, die von der mobilen Einheit empfangen werden sollen, wobei eine der mehreren Antwortoptionen das Anweisen des Netzwerks umfasst, die mobile Einheit (125) anzuschalten, und
Mittel zum Anschalten der mobilen Einheit, wenn der Anruf einer zum Profil gehörigen Anruferidentität entspricht und wenn die Telefonstation (130) die Antwortoption ausgewählt hat, die die Weiche (105) anweist, die mobile Einheit (125) anzuschalten.

6. Vorrichtung nach Anspruch 5, wobei das Profil mindestens eine befugte Rufnummer umfasst und die Vorrichtung ferner eine Datenbank (110) mit Mitteln zum Speichern der mindestens einen befugten Rufnummer umfasst.

7. Vorrichtung nach Anspruch 5, die ferner Mittel in der Weiche zum Erlangen einer Vorgabe von dem Benutzer umfasst, die angibt, dass ein registrierter ausgeschalteter Zustand für die mobile Einheit ausgeführt werden soll, und zum Versetzen der mobilen Einheit in einen registrierten ausgeschalteten Zustand, nachdem die mobile Einheit angeschaltet wurde und nach Erhalt der Vorgabe von dem Benutzer der mobilen Einheit, die angibt, dass ein registrierter ausgeschalteter Zustand für die mobile Einheit ausgeführt werden soll.

## Revendications

1. Procédé, comprenant les étapes de :
fourniture d'une unité mobile (125) susceptible de fonctionnement dans une condition de mise hors tension, une condition de mise sous tension fonctionnant normalement et une condition de coupure enregistrée dans laquelle la condition de coupure de l'unité mobile est enregistrée avec un commutateur (105) gérant des appels à recevoir par l'unité mobile ;
établissement de la condition de coupure enregistrée dans l'unité mobile ;
détermination si un appel dirigé vers l'unité mobile est associé à un numéro appelant autorisé d'un profil associé à l'unité mobile, indiquant que l'appelant correspondant est autorisé à envoyer une instruction au commutateur pour mettre sous tension l'unité mobile ;
lors de la détermination que l'appel est associé au numéro appelant autorisé et avant de mettre sous tension l'unité mobile, acheminement à une station téléphonique (130) associée à l'appel d'une pluralité d'options de réponse ;
déclenchement d'une de la pluralité d'options de réponse, dans lequel une de la pluralité d'options de réponse comprend l'étape d'instruction du commutateur pour mettre sous tension l'unité mobile ; et
mise sous tension de l'unité mobile en réponse à l'appel si l'appel est associé à un numéro appelant autorisé et que la station téléphonique (130) a sélectionné l'option de réponse qui donne instruction au commutateur (105) de mettre sous tension l'unité mobile.

2. Procédé selon la revendication 1, comprenant en outre l'étape de stockage dans une base de données du numéro appelant autorisé, et dans lequel l'étape de détermination comprend l'étape de détermination si l'appel est associé au numéro appelant autorisé stocké dans la base de données.

3. Procédé selon la revendication 2, dans lequel l'étape de stockage comprend en outre l'étape de stockage d'au moins un d'une pluralité de numéros appelants autorisés dans la base de données.

4. Procédé selon la revendication 1, comprenant les étapes de :
après la mise sous tension de l'unité mobile, obtention d'une invite provenant d'un utilisateur de l'unité mobile, indiquant qu'une condition de coupure enregistrée pour l'unité mobile doit être exécutée ; et
en réponse à l'invite, réglage de l'unité mobile dans une condition de coupure enregistrée.

5. Appareil (100), comprenant :
une unité mobile (125) ; et
un commutateur (105) comprenant :
des moyens pour maintenir l'unité mobile dans une condition de coupure enregistrée ;
des moyens pour déterminer si un appel dirigé vers l'unité mobile correspond à une identité d'appelant associée à un numéro appelant autorisé d'un profil associé à l'unité mobile indiquant que l'appelant est autorisé à envoyer une instruction au commutateur pour mettre sous tension l'unité mobile ;
des moyens pour acheminer, avant de mettre sous tension l'unité mobile, une pluralité d'options de réponse vers une station téléphonique (130) associée à l'appel, et pour déclencher avec un réseau (115) une gestion d'appels à recevoir par l'unité mobile, une de la pluralité d'options de réponse par la station téléphonique (130) dans lequel une de la pluralité d'options de réponse comprend l'instruction du réseau pour mettre sous tension l'unité mobile (125) ; et
des moyens pour mettre sous tension l'unité mobile si l'appel correspond à une identité d'appelant associée au profil et si la station téléphonique (130) a sélectionné l'option de réponse qui donne instruction au commutateur (105) de mettre sous tension l'unité mobile (125).

6. Appareil selon la revendication 5, dans lequel le profil comprend au moins un numéro appelant autorisé et l'appareil comprenant en outre une base de données (110) avec des moyens pour stocker l'au moins un numéro appelant autorisé.

7. Appareil selon la revendication 5, comprenant en outre des moyens dans le commutateur pour obtenir une invite provenant de l'utilisateur indiquant une condition de coupure enregistrée pour l'unité mobile doit être exécutée et pour régler l'unité mobile dans une condition de coupure enregistrée après que l'unité mobile est mise sous tension et lors de la réception de l'invite provenant de l'utilisateur de l'unité mobile indiquant qu'une condition de coupure enregistrée pour l'unité mobile doit être exécutée.
